Europäisches Patentamt

European Patent Office

Office européen des brevets

(19)

(11) Veröffentlichungsnummer : **0 360 810 B1**

(12) **EUROPÄISCHE PATENTSCHRIFT**

(45) Veröffentlichungstag der Patentschrift :
05.08.92 Patentblatt 92/32

(51) Int. Cl.$^5$ : **G01L 27/00**

(21) Anmeldenummer : **88903774.3**

(22) Anmeldetag : **07.05.88**

(86) Internationale Anmeldenummer :
**PCT/DE88/00276**

(87) Internationale Veröffentlichungsnummer :
**WO 88/08966 17.11.88 Gazette 88/25**

(54) **DRUCKNORMAL.**

(30) Priorität : **08.05.87 DE 3715450**

(43) Veröffentlichungstag der Anmeldung :
**04.04.90 Patentblatt 90/14**

(45) Bekanntmachung des Hinweises auf die
Patenterteilung :
**05.08.92 Patentblatt 92/32**

(84) Benannte Vertragsstaaten :
**BE CH DE FR GB IT LI NL**

(56) Entgegenhaltungen :
**EP-A- 0 203 364**
**DE-A- 2 323 019**
**FR-A- 2 420 746**
**GB-A- 2 056 098**

(73) Patentinhaber : **Pfister GmbH**
**Stätzlinger Strasse 70**
**W-8900 Augsburg (DE)**

(72) Erfinder : **HÄFNER, Hans, W.**
**Fichtenweg 15**
**W-8890 Aichach-Walchshofen (DE)**

(74) Vertreter : **Kahler, Kurt, Dipl.-Ing.**
**Patentanwälte Kahler & Käck Gerberstrasse 3**
**Postfach 1249**
**W-8948 Mindelheim (DE)**

EP 0 360 810 B1

**Beschreibung**

Die Erfindung betrifft ein Drucknormal gemäß dem Oberbegriff des Patentanspruchs 1.

Aus dem Buch "Messen, Steuern und Regeln in der chemischen Technik", Herausgeber J. Hengstenberg, B. Sturm, 0. Winkler, dritte Auflage, Band I, Seiten 112 bis 117, Berlin 1980, sind Druckwaagen bekannt, bei denen ein zylindrischer Kolben durch eine Öffnung in einen geschlossenen, mit öl gefüllten Zylinder eintaucht, an den über eine weitere Öffnung der Druck p anliegt. Der vertikal ausgerichtete Kolben wird mit Gewichten belastet. Problematisch hierbei ist die Abdichtung des Kolbens in der Öffnung, da einmal keine Reibung auftreten darf und zum anderen keine Flüssigkeit austreten soll. Gewöhnlich wird deshalb der Kolben vor dem Anlegen des Drucks in Rotation versetzt, was die Reibung vermindert. Durch radiales Einpressen von Luft oder Flüssigkeit in den Spaltraum kann die Reibung zwischen dem Kolben und dem Zylinder weiter reduziert werden. Ein weiteres Problem ergibt sich bei der Druckmessung in Gasen beim Übergang von der Flüssigkeit zum Gas, wobei spezielle Vorlagen geschaffen werden müssen, wenn es sich nicht um inertes Gas handelt. Selbst dann bereitet der übergang von der Flüssigkeit zum Gas Probleme, da die Höhenposition des Kolbens im Zylinder nicht definiert ist. Es müssen deshalb Anschläge für eine übermäßige Bewegung des Kolbens sowohl nach oben als auch nach unten vorgesehen werden.

Die DE-OS 35 14 911 beschreibt eine weitere Druckmeßeinrichtung zum Messen eines über ein gasförmiges Medium auf einen Kolben ausgeübten Drucks, wobei der Kolben in einem Zylinder dadurch praktisch reibungsfrei in Lagern geführt ist, daß die Lager unter Druck mit einer Flüssigkeit versorgt werden, wobei der Kolben auf eine Kraftmeßvorrichtung wirkt. Die Lagerflüssigkeit, die in den das Gas enthaltenden Zylinderraum austritt, wird dabei geregelt entfernt. Bei einer alternativen Ausführungsform wird den Lagern ein Gas unter Druck zugeführt, wobei in den Zylinderraum austretendes Lagergas zum Druckaufbau in einer mit dem Zylinderraum verbundenen Leitung verwendbar ist. Da die Kraftmeßvorrichtung praktisch weglos arbeitet, tritt auch praktisch keine Kolbenverschiebung auf und die Position des Kolbens spielt keine Rolle.

Die GB-A-2056098 zeigt ein Drucknormal mit einem Zylinder und einem darin geführten Kolben, dessen Höhenposition bei variierender Belastung des Kolbens gleichbleibend gehalten werden muß, um eine Berührung des Zylinders zu vermeiden. Im unteren Bereich des Zylinders ist ein Druckraum ausgebildet, der über eine Leitung mit einem unter Druck stehenden Fluid in Verbindung steht und durch Belasten des Kolbens mit einem Kalibriergewicht kann der Druck im Druckraum bestimmt werden. Hierbei wird eine gleichbleibende Höhen- bzw. Nullposition des Kolbens über eine Anzeigeeinrichtung ermittelt und durch Zuführen des Fluids zum Druckraum eingehalten.

Nachteilig ist hierbei jedoch die Führung des Kolbens mittels einer oberen und unteren Membran, zwischen denen der Kolben straff eingespannt ist. Durch diese Art der Lagerung werden die Meßwerte auf Grund des Verformungswiderstandes der Membranen verfälscht und beeinträchtigen damit die Meßgenauigkeit der Kraftmeßvorrichtung. Durch die den Kolben fest einspannenden Membranen kann sich dieser nur minimal bewegen, so daß die Höhenregelung zur Einhaltung einer bestimmten Höhenposition extrem genau ausgelegt sein muß. Zudem ist der Bauaufwand für diese Membranen beträchtlich.

Der Erfindung liegt die Aufgabe zugrunde, eine Eich-/Prüfeinrichtung anzugeben, deren Aufbau unter Einhaltung einer hohen Genauigkeit gegenüber bekannten Einrichtungen erheblich vereinfacht wird.

Erfindungsgemäß wird diese Aufgabe gelöst durch eine Eich-/ Prüfeinrichtung mit den Merkmalen des Kennzeichens des Patentanspruchs 1.

Bevorzugte Weiterbildungen der erfindungsgemäßen Einrichtung sind in den abhängigen Ansprüchen gekennzeichnet.

Die hydrostatische bzw. aerostatische Lagerung des Kolbens im Zylinder ist praktisch reibungslos, so daß keine Rotation des Kolbens erforderlich ist. Die Verwendung einer Flüssigkeit als Lagerfluid ist auf Grund der geregelten Abführung möglich. Eine besonders einfache Anordnung ergibt sich, dann wenn das Lagerfluid zum Druckaufbau verwendet wird. Die bei der Erfindung verwendete Niveauregelung sorgt für eine exakte Höhenposition des Kolbens im Zylinder, so daß dieser weder am Boden anliegt, noch aus seinen Lagern nach oben geschoben werden kann.

Weitere Merkmale und Vorteile der erfindungsgemäßen Eich-/Prüfeinrichtung ergeben sich aus der nachfolgenden Beschreibung von Ausführungsbeispielen anhand der Zeichnung.

Es zeigen

Fig. 1 eine Prinzipdarstellung eines Gasdrucknormals teilweise im Schnitt,

Fig. 2 eine praktische Ausführungsform eines Gasdrucknormals auf der Basis des Ausführungsbeispiels nach Fig. 1 und

Fig. 3 eine weitere Ausführungsform eines Gas- oder Flüssigkeitsdrucknormals in besonders vereinfachter Ausführung.

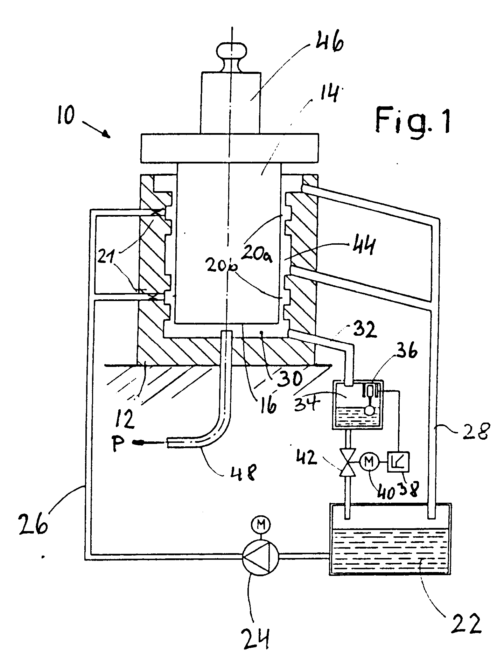

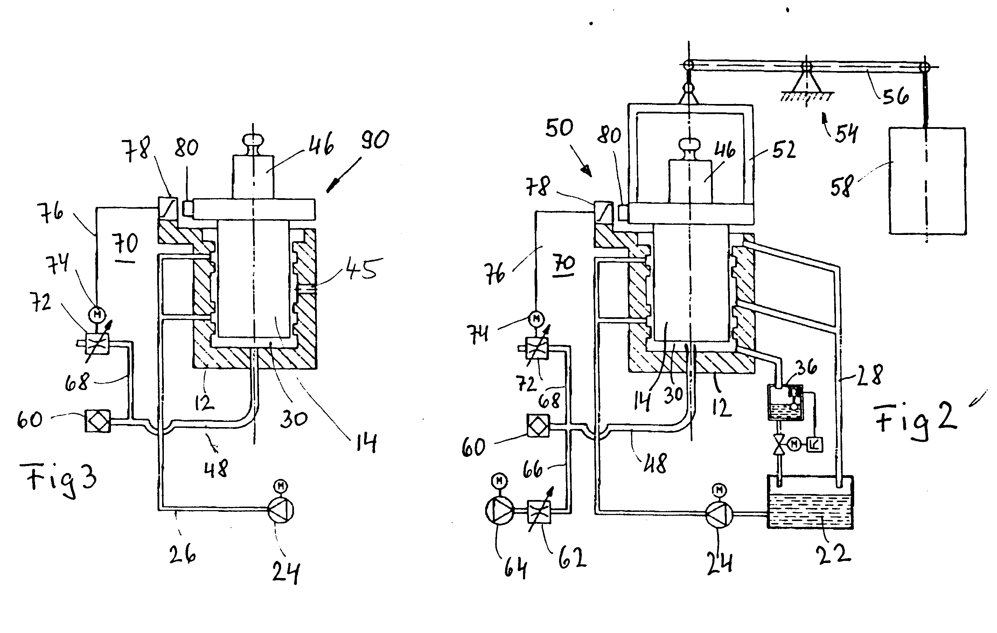

Fig. 1 zeigt ein Gasdrucknormal 10 gemäß einer ersten Ausführungsform der Erfindung mit einem auf einer Grundfläche abgestützten Zylinder 12, in dem ein Kolben 14 praktisch reibungslos geführt ist, der mit einer Eichmasse 46 belastbar ist. Im Inneren des Zylinders 12 bildet sich ein Druckraum 30, der mit Gas, insbesondere Luft gefüllt ist und über eine Leitung 48 einen Druck p an eine zu eichende bzw. zu prüfende Vorrichtung, etwa eine Druckmeßzelle (vgl. Fig. 2 und 3) anlegt. Der Druck wird im wesentlichen bestimmt durch die Eichmasse 46 und die Fläche der unteren Stirnseite 16 des Kolbens 14.

Die praktisch reibungslose Lagerung des Kolbens 14 in dem Zylinder 12 erfolgt über hydrostatische Lager 20, wie sie beispielsweise aus der DE-OS 31 43 919 oder 35 14 911 bekannt sind. Hierzu wird aus einem geschlossenen Tank 22 über eine Pumpe 24 und eine Zuführungsleitung 26 unter Druck eine Lagerflüssigkeit, etwa ein Öl, zugeführt. Ein Teil der Lagerflüssigkeit sammelt sich in Taschen 44. Es dringt jedoch auch Lagerflüssigkeit in den unter der Kolbenfläche 16 liegenden Druckraum 30, der mit der Zeit von der Lagerflüssigkeit ausgefüllt würde, was zu einer Beeinträchtigung des Meßergebnisses führen würde. Es ist deshalb eine kontrollierte Rückleitung dieser Lagerflüssigkeit aus dem Druckraum 30 vorgesehen. Hierzu führt eine Leitung 32 vom Druckraum 30 in ein geschlossenes Auffanggefäß 34, das somit unter den gleichen Druck steht, wie der Druckraum 30. Die Menge der Lagerflüssigkeit in dem Gefäß 34 wird nun ständig auf einem vorbestimmten Pegel gehalten. Hierzu ist eine Pegelfeststellvorrichtung 36 vorgesehen, die beispielsweise die Form eines Schwimmers haben kann, dessen Position vorzugsweise optisch oder elektrisch festgestellt wird. Bei überschreiten eines bestimmten Pegels wird eine Regeleinrichtung 38 aktiviert, die ein Entleerungsventil 42 vorzugsweise über einen Motor 40 so lange öffnet, bis der Lagerflüssigkeitsstand wieder unter den Sollpegel abgesunken ist. Die Lagerflüssigkeit fließt zurück in den Tank 22, so daß sich ein geschlossenes System ergibt, bei dem kein Nachfüllen von Lagerflüssigkeit erforderlich ist.

Auf Grund der geregelten Abführung der Lagerflüssigkeit aus dem Druckraum 30 wird das unter Druck stehende Volumen nicht verändert, so daß sich eine hohe Genauigkeit ergibt. Es sei bemerkt, daß die Leitung 48 über den Boden des Zylinders 12 etwas übersteht, so daß keine Lagerflüssigkeit in die Leitung 48 dringen kann.

Durch Auflegen unterschiedlicher Eichmassen 46 werden exakt definierte Drucke erzeugt und an den Prüfling, etwa eine Druckmeßzelle gelegt, deren Anzeigewerte dann zur Erstellung der üblichen Eich- bzw. Prüfkurve dienen.

Nachdem anhand von Fig. 1 das Prinzip der erfindungsgemäßen Einrichtung beschrieben wurde, sei nun auf Fig. 2 Bezug genommen, die ein praxisnahes Ausführungsbeispiel einer erfindungsgemäßen Eich-/Prüfeinrichtung 50 in schematischer Ansicht zeigt. Die bereits anhand der Fig. 1 beschriebenen Elemente sind mit den gleichen Bezugszeichen versehen und werden in diesem Zusammenhang nicht näher erläutert.

Zusätzlich zum Ausführungsbeispiel nach Fig. 1 weist die Eich-bzw. Prüfeinrichtung nach Fig. 2 einmal eine Gewichtsausgleichsvorrichtung 54 und zum anderen eine Positionsregelung 70 auf.

Die Ausgleichseinrichtung 54 dient insbesondere dazu, das Gewicht des Kolbens 14 zu kompensieren. Obwohl hierfür verschiedene Vorrichtungen in Frage kommen, ist als ein Beispiel ein ortsfest gelagerter zweiarmiger Hebel 56 gewählt, der an seinem einen Ende über einen Bügel 52 gelenkig mit dem Kolben 14 verbunden ist, während an seinem anderen Ende eine Ausgleichmasse 58 angebracht ist, die bei fehlender Eichmasse 46 exakt ein Gleichgewicht herstellt.

Fig. 2 zeigt ferner die zu eichende bzw. zu prüfende Druckmeßzelle 60, die mit dem Druck auf Leitung 48 beaufschlagt wird. Für eine Grundeinstellung kann von einer etwa mittels eines Motors M betriebenen Pumpe 64 Gas, insbesondere Luft bis zu einem Druck zugeführt werden, der mittels des Stellgliedes 62 einstellbar ist. Bei Erhöhung der Größe der Eichmassen 46 würde der Kolben 14 in den Zylinder 12 hineingedrückt werden, bis er schließlich am Stutzen der Leitung 48 anstößt. Um dies zu verhindern und eine exakte Position des Kolbens 14 im Zylinder 12 beizubehalten, ist an einer oberen Kante des Kolbens 14 eine passive Markierung oder ein optischer, magnetischer oder elektrischer Sender 80 vorgesehen, der mittels eines Sensors 78 abgetastet wird, der dem Sender 80 gegenüberstehend an einem Ansatz an der Oberkante des Zylinders 12 angebracht ist. Der Sensor 78 ist mit einer Regelvorrichtung ausgestattet, die über eine elektrische Leitung 76 einen Motor 74 in der einen oder anderen Drehrichtung beaufschlagen kann, je nachdem, ob der Kolben 14 zu hoch oder zu niedrig steht. Der Motor 74 bewegt ein Stellglied 72, das über eine Druckleitung 68 der Leitung 48 Gas, insbesondere Luft solange zuführt, bis der Kolben 14 seine exakte Position, also eine Nullposition erreicht hat. Auf diese Weise wird der Kolben 14 bei Änderung der Eichmasse 46 wieder automatisch in die richtige Position eingestellt.

Es sei darauf hingewiesen, daß beim Ausführungsbeispiel eine automatische Regelung 50 gezeigt ist. Es besteht jedoch auch die Möglichkeit, die Justierung des Kolbens 14 durch manuelle Betätigung des Stellgliedes 72 zu positionieren.

Fig. 3 zeigt ein weiteres Ausführungsbeispiel der Erfindung mit einem besonders einfachen Aufbau. Bei diesem Ausführungsbeispiel wird von dem Grundgedanken Gebrauch gemacht, daß das Lagerfluid für die hydrostatische oder aerostatische Lagerung des Kolbens 14 in dem Zylinder 12 gleichzeitig als Druckmedium Verwendung findet. Das Lagerfluid kann in diesem Falle ein Gas oder eine Flüssigkeit sein, wobei das Gas den Vorzug hat, daß es die Druckmeßzelle 60 nicht chemisch beeinträchtigt.

Da bei diesem Ausführungsbeispiel keine Lagerflüssigkeit geregelt abzuführen ist, fallen die in den Fig. 1 und 2 für diesen Zweck verwendeten Elemente weg, was den Aufbau erheblich vereinfacht.

Bei diesem Ausführungsbeispiel einer Eich- bzw. Prüfeinrichtung 90 wird ein bestimmter Basisdruck über die motorbetriebene Pumpe 24 an die Lagerstellen gelegt. Auf Grund des Hindurchleckens des Lagerfluids durch die hydrostatischen bzw. aerostatischen Lager füllt sich der Druckraum 30 mit Lagerfluid, so daß schließlich ein entsprechender Druck über Leitung 48 an den Prüfling, insbesondere die Druckmeßzelle 60 angelegt wird.

Über die Regelung 70 wird wiederum die exakte Positionierung des Kolbens 14 erreicht.

Es sei daraufhingewiesen, daß auch bei diesem Ausführungsbeispiel eine Gewichtsausgleichsvorrichtung 54 gemäß Fig. 2 verwendet werden kann.

Abschließend sei daraufhingewiesen, daß es nicht genügt, in ein glattes Öllager Luft unter Druck einzublasen, um eine Berührung des Kolbens mit der Zylinderwand bzw. mit deren Öffnung zu Bereits eine geringfügige Unsymmetrie einer aufgelegten Eichmasse 46 kann zum Anstoßen des Kolbens an der Zylinderwand führen.

Wie die Figuren 1 bis 3 zeigen, besteht die erfindungsgemäße hydrostatische oder aerostatische Lagerung aus zwei voneinander in Abstand angeordneten Lagerringen 20a und 20b, zwischen denen sich eine ringförmige Tasche 44 befindet, die druckfrei ist, beispielsweise auf Grund einer Bohrung 45 (Fig. 3).

Wie in Fig. 1 angedeutet, sind die Ausgänge der Leitung 26 an den Lagerringen 20a bzw. 20b mit Drosseln 21 versehen, die einen Vor- und Rückfluß von Lagerfluid bremsen. Dies bedeutet, daß bei einem eventuellen Neigen des Kolbens 14 der Spalt zwischen dem Kolben und der Lagerrinne unsymmetrisch wird, wobei dann an der engeren Stelle ein höherer Druck und an der weiteren Stelle ein niedrigerer Druck auftritt, der den Kolben wieder in senkrechte Position bringt.

Zur weiteren Verbesserung der hydrostatischen Lagerung kann jede Lagerrinne 20a bzw. 20b nochmals in drei zueinander parallele Einzelrinnen aufgeteilt sein, die jeweils über Drosseln gespeist werden.

## Patentansprüche

1. Drucknormal mit einem Zylinder, durch dessen obere Öffnung ein Kolben möglichst reibungsfrei geführt ist, wobei zwischen der inneren Stirnfläche des Kolbens und dem Boden des Zylinders ein Druckraum gebildet ist, aus dem über eine Leitung ein exakter Druck abgeleitet wird, welcher durch Belasten des Kolbens mit exakt definierten Kräften, insbesondere Auflegen von Eichmassen, bestimmt wird, wobei eine exakt gleichbleibende Höhenposition des Kolbens mittels einer Regeleinrichtung auch bei variierender Belastung des Kolbens (14) unter Zu- bzw. Abführen von Fluid zur Leitung (48) eingehalten wird, dadurch gekennzeichnet, daß der Kolben (14) in dem Zylinder (12) hydrostatisch bzw. aerostatisch gelagert ist und das in den Druckraum (30) aus den hydrostatischen bzw. aerostatischen Lagern (20) austretende Lagerfluid zum Druckaufbau in der Leitung (48) verwendet wird.

2. Drucknormal nach Anspruch 1, dadurch gekennzeichnet, daß eine Gewichtsausgleichsvorrichtung (54) zur Kompensation des Gewichtes des Kolbens (14) vorgesehen ist.

3. Drucknormal nach Anspruch 1 oder 2, dadurch gekennzeichnet, daß die in den Druckraum (30) eintretende Lagerflüssigkeit geregelt entfernt wird.

4. Drucknormal nach Anspruch 3, dadurch gekennzeichnet, daß der Druckraum (30) über eine Leitung (32) mit einem Sammelgefäß (34) in Verbindung steht, in das in den Druckraum (30) austretende Flüssigkeit abläuft und daß der Flüssigkeitspegel in dem Sammelgefäß (34) durch geregeltes Ableiten von Flüssigkeit konstant gehalten wird.

5. Drucknormal nach Anspruch 3 oder 4, dadurch gekennzeichnet, daß über eine Pegelstandanzeige (36) ein Entleerungsventil (42) in seiner Durchlässigkeit geregelt wird.

6. Drucknormal nach einem der Ansprüche 3 bis 5, dadurch gekennzeichnet, daß ein geschlossener Vorratstank (22) für die Lagerflüssigkeit vorgesehen ist, aus der diese in die Lager (20) gepumpt wird und in die aus dem Druckraum (30) entfernte Lagerflüssigkeit geregelt abgelassen wird.

7. Drucknormal nach einem der vorhergehenden Ansprüche, dadurch gekennzeichnet, daß die Leitung (48) über den Boden des Zylinders (12) übersteht.

8. Drucknormal nach einem der vorhergehenden Ansprüche, dadurch gekennzeichnet, daß die Regeleinrichtung (70) einen Höhenpositionssensor (78,80) mit nachgeschalteter Regelvorrichtung aufweist; die ein Stellglied (72,74) zum Zu- und Abführen von Fluid zu bzw. von der Leitung (48) erregt.

9. Drucknormal nach einem der vorhergehenden Ansprüche, dadurch gekennzeichnet, daß eine geregelte Druckzuführvorrichtung (62,64) zum Aufbau eines Basisdruckes an die Leitung (48) angeschlossen ist.

10. Drucknormal nach einem der vorhergehenden Ansprüche, dadurch gekennzeichnet, daß die hydrostatische bzw. aerostatische Lagerung aus zwei in Abstand zueinander angeordneten kreisförmigen Lagerreihen (20a,20b) besteht, die voneinander durch eine ringförmige Tasche (44) getrennt sind, welche annähernd druckfrei ist.


**Claims**

1. Standardized pressure instrument including a cylinder through the upper opening of which a piston is guided as friction-free as possible, a pressure space being formed between the interior end surface of the piston and the bottom of the cylinder, from which pressure space an exact pressure is supplied through a duct, which pressure is determined by loading the piston by exactly defined forces, in particular placing standard masses thereon, an exactly constant height position of the piston being maintained by a regulating means even with varying loading of the piston (14) by supplying or removing, respectively, fluid to the duct (48), characterized in that the piston (14) is hydrostatically or aerostatically, respectively, supported in the cylinder (12) and the bearing fluid entering the pressure space (30) from the hydrostatic or aerostatic bearings (20), respectively, is used for pressure build-up in the duct (48).

2. Standardized pressure instrument according to claim 1, characterized in that a weight compensation means (54) is provided for compensating the weight of the piston (14).

3. Standardized pressure instrument according to claim 1 or 2, characterized in that the bearing liquid entering the pressure space (30) is removed in a controlled manner.

4. Standardized pressure instrument of claim 3, characterized in that the pressure space (30) is connected via a duct (32) with a collecting container (34) into which the liquid leaking into the pressure space (30) drains away and that the liquid level in the collecting container (34) is maintained constant by a controlled removal of liquid.

5. Standardized pressure instrument according to claim 3 or 4, characterized in that a removal valve (42) is controlled in its throughput by a level indicator (36).

6. Standardized pressure instrument according to any of claims 3 to 5, characterized in that a closed supply tank (22) is provided for the bearing liquid from which it is pumped into the bearings (20) and into which bearing liquid removed from the pressure space (30) is drained away in a controlled manner.

7. Standardized pressure instrument according to any of the preceding claims, characterized in that the duct (48) projects beyond the bottom of the cylinder (12).

8. Standardized pressure instrument according to any of the preceding claims, characterized in that the regulating means (70) is provided with a height position sensor (78, 80) having a regulating means connected thereto actuating an actuating member (72, 74) for supplying and removing fluid to or from, respectively, the duct (48).

9. Standardized pressure instrument according to any of the preceding claims, characterized in that a controlled pressure supply means (62, 64) is connected to the duct (48) for establishing a basic pressure.

10. Standardized pressure instrument according to any of the preceding claims, characterized in that the hydrostatic or aerostatic, respectively, support comprises two circular rows of bearings (20a, 20b) arranged at distance to each other, the rows being separated from each other by an annular pocket (44) which is substantially pressure-free.


**Revendications**

1. Etalon de pression comprenant un cylindre à travers l'ouverture supérieure duquel un piston est guidé d'une façon aussi exempte de frottement que possible, cependant qu'entre la surface frontale intérieure du piston et le fond du cylindre est formée une chambre sous pression depuis laquelle est prélevée, par l'intermédiaire d'une conduite, une pression précise qui est déterminée en chargeant le piston par des forces exactement définies, en particulier en posant des masses d'étalonnage, et qu'une position en hauteur du piston restant exactement constante est maintenue au moyen d'un dispositif de régulation, même lorsque la charge du piston (14) varie, en amenant ou en enlevant du fluide à la conduite (48) ou de celle-ci, respectivement, caractérisé par le fait que le piston (14) est monté dans le cylindre (12) sur des paliers hydrostatiques ou à gaz, respectivement, et que le fluide du palier qui arrive dans la chambre sous pression (30) en sortant des paliers (20) hydrostatiques ou à gaz, respectivement, est utilisé pour établir la pression dans la conduite (48).

2. Etalon de pression selon la revendication 1, caractérisé par le fait qu'il est prévu un dispositif (54) d'équilibrage du poids pour compenser le poids du piston (14).

3. Etalon de pression selon la revendication 1 ou 2, caractérisé par le fait que le liquide du palier qui entre dans la chambre sous pression (30) est évacué de manière régulée.

4. Etalon de pression selon la revendication 3, caractérisé par le fait que la chambre sous pression (30) communique, par l'intermédiaire d'une conduite (32), avec un réservoir collecteur (34) dans lequel s'écoule le liquide qui arrive dans la chambre sous pression (30), et par le fait que le niveau du liquide dans le réservoir collecteur (34) est maintenu constant par un prélèvement régulé de liquide.

5. Etalon de pression selon la revendication 3 ou 4, caractérisé par le fait qu'une soupape de vidange (42) est régulée quant à sa capacité de passage par l'intermédiaire d'un indicateur de niveau (36).

6. Etalon de pression selon l'une des revendications 3 à 5, caractérisé par le fait qu'il est prévu un réservoir ferme (22) qui est destiné au liquide du palier, et à partir duquel celui-ci est pompé dans le palier (20) et évacué de manière régulée dans le liquide du palier évacué de la chambre sous pression (30).

7. Etalon de pression selon l'une des revendications précédentes, caractérisé par le fait que la conduite (48) est en saillie au-dessus du fond du cylindre (12).

8. Etalon de pression selon l'une des revendications précédentes, caractérisé par le fait que le dispositif de régulation (70) comporte un capteur de position en hauteur (78, 80) comprenant un dispositif de régulation monté en aval qui excite un organe de réglage (72, 74) destiné à amener ou à enlever du fluide à la conduite (48) ou de celle-ci, respectivement.

9. Etalon de pression selon l'une des revendications précédentes, caractérisé par le fait qu'un dispositif régule d'amenée de la pression (62, 64) est raccordé à la conduite (48) en vue de l'établissement d'une pression de base.

10. Etalon de pression selon l'une des revendications précédentes, caractérisé par le fait que le montage sur palier hydrostatique ou à gaz, respectivement, se compose de deux séries de paliers circulaires (20a, 20b) qui sont disposées à distance l'une de l'autre et qui sont séparées l'une de l'autre par une cavité annulaire (44) qui est approximativement exempte de pression.

Fig.1

Fig 2

Fig 3